# EUROPÄISCHE PATENTSCHRIFT

(11) **EP 1 225 028 B1**
(45) Veröffentlichungstag und Bekanntmachung des Hinweises auf die Patenterteilung: **07.06.2006**
(21) Anmeldenummer: 02000928.8
(22) Anmeldetag: 16.01.2002
(51) Int. Cl.: B29C 65/02, B29C 65/00, B65B 51/10

(54) **Verfahren zur Einstellung des Bearbeitungsablaufes bei der Herstellung von Siegelnähten**
Method for controlling the process of making welded joints
Méthode de contrôle du processus de réalisation de joints de soudure

(30) Priorität: 22.01.2001 DE 10102798
(43) Veröffentlichungstag der Anmeldung: 24.07.2002
(73) Patentinhaber: Alcan Technology & Management AG, 8212 Neuhausen (CH)
(72) Erfinder: Schubert, Günter, Dr., 53359 Rheinbach (DE); Lennarz, Michael, 53117 Bonn (DE); Broich, Bruno, Dr., 41515 Grevenbroich (DE); Boiron, Guy, 68920 Wintzenheim (FR); Koblischek, Alfred, Dr., 77966 Kappel (DE); Razeti, Marco, Dr., 35142 Padova (IT)
(74) Vertreter: Cohausz & Florack

(56) Entgegenhaltungen:
- EP-A- 0 899 085
- EP-A- 0 919 360
- DE-A- 4 311 320
- US-A- 3 939 027
- US-B1- 6 197 136
- PATENT ABSTRACTS OF JAPAN vol. 2000, no. 07, 29. September 2000 (2000-09-29) -& JP 2000 094523 A (HISHINUMA KAZUO), 4. April 2000 (2000-04-04)
- PATENT ABSTRACTS OF JAPAN vol. 2000, no. 07, 29. September 2000 (2000-09-29) -& JP 2000 095217 A (HISHINUMA KAZUO), 4. April 2000 (2000-04-04)
- MEKA P ET AL: "HEAT SEALING OF SEMICRYSTALLINE POLYMER FILMS. I. CALCULATION AND MEASUREMENT OF INTERFACIAL TEMPERATURES: EFFECT OF PROCESS VARIABLES ON SEAL PROPERTIES" , JOURNAL OF APPLIED POLYMER SCIENCE, JOHN WILEY AND SONS INC. NEW YORK, US, VOL. 51, PAGE(S) 89-103 XP001109193 ISSN: 0021-8995 * das ganze Dokument *

## Beschreibung

Die Erfindung betrifft ein Verfahren zur Einstellung des Bearbeitungsablaufes bei der Herstellung von Siegelnähten, bei welchem mit Hilfe eines Temperaturmeßelementes die Grenzflächentemperatur an der Grenzfläche zwischen den Siegelpartnern gemessen wird.

Siegelnähte werden in großem Umfang zur Herstellung von Lebensmittelverpackungen bzw. zum Verschließen von Lebensmittelverpackungen eingesetzt. Beispielsweise wird die Öffnung von Behältern für Milcherzeugnisse regelmäßig über Versiegeln mit einem Deckel, bestehend beispielsweise aus einem Aluminium-Kunststofflaminat, einem Papier-Kunststofflaminat oder einem Kunststofflaminat verschlossen. Auch beispielsweise sogenannte Standbodenbeutel werden durch Versiegeln des Beutelmaterials gegeneinander hergestellt bzw. verschlossen. Darüber hinaus werden Siegelnähte auch in anderen Bereichen zum verbinden sogenannter Siegelpartner eingesetzt.

Die Siegelwärme oder Siegelenergie, die zur Herstellung der Siegelnaht notwendig ist, wird beispielsweise durch direkte Wärmeeinleitung beim sogenannten Heißsiegeln, durch Ultraschalleinkopplung oder durch induktive Energiekopplung in den Siegelbereich eingebracht.

Bei der Herstellung von Siegelnähten sind im wesentlichen drei Anforderungen zu erfüllen. Zum einen soll sicher gestellt sein, daß die Bearbeitungszeit zur Herstellung der Siegelnaht möglichst kurz ist. Zum anderen muß gewährleistet sein, daß die Siegelnaht die Verbindungsstelle dicht verschließt. Schließlich soll die Siegelnaht eine hinreichende Festigkeit aufweisen, um einer Belastung der Siegelpartner, beispielsweise beim Transport und bei der Lagerung der versiegelten Behälter, zu widerstehen, gleichzeitig aber darf die Verbindung nicht zu fest sein, um ein beabsichtigtes Öffnen ohne übergroßen Kraftaufwand zu ermöglichen.

Eine Siegelnaht, die die genannten Anforderungen erfüllt, wird dadurch hergestellt, daß der Zeit-Temperatur-Druck-Verlauf beim Anpressen der Siegelwerkzeuge in geeigneter Weise eingestellt wird. Hierzu ist es aus dem Stand der Technik aus beispielsweise dem Artikel "Heat Sealing of Semicrystalline Polymer Films", Journal of Applied Polymer Science, Vol. 51, 89 - 103 (1994), bekannt, die Grenzflächentemperatur an der Grenzfläche zwischen den Siegelpartnern mit Hilfe eines Temperaturmeßelementes, beispielsweise eines Thermoelementes, während des Wäremeintrages zu messen, um festzustellen, ob die Schmelztemperatur zumindest einer Siegelschicht der Siegelpartner während des Wärmeeintrages überschritten wird. In dem bekannten Stand der Technik wird weiter ein theoretisches Modell beschrieben, welches die Berechnung des Grenzflächentemperaturverlaufes EDV-gestützt ermöglicht.

Dieses bekannte Verfahren zur Einstellung des Zeit-Temperatur-Druck-Verlaufes beim Versiegeln ist unter verschiedenen Gesichtspunkten problematisch. Zum einen läßt sich mit dem beschriebenen Verfahren lediglich feststellen, ob die Schmelztemperatur an der Grenzfläche überschritten worden ist, während Rückschlüsse auf den Umfang des Aufschmelzens der Siegelschichten nicht oder nur sehr eingeschränkt möglich sind.

Zum anderen ist für den Bearbeitungsablauf bei der Herstellung von Siegelnähten neben den oben beschriebenen Anforderungen an die Qualität der Siegelnähte weiter von großer Bedeutung, ab welchem Zeitpunkt die Siegelnaht nach dem Wärmeeintrag soweit abgekühlt ist, daß sie belastbar wird. Dies ist deshalb von besonderer Bedeutung, da beispielsweise Becher, in die Milcherzeugnisse abgefüllt wurde, unmittelbar nach der Versiegelung belastet werden können oder einem Dichtheitstest unterzogen werden. Bei einem solchen Dichtheitstest wird in der Regel Druck auf die Becherwände ausgeübt und dabei überwacht, ob sich der Becherdeckel aufgrund des erhöhten Druckes im Becher hebt - der Becher also dicht ist. Die Belastung wird hierbei so gewählt, daß der Dichtheitstest nicht zu Leckagen oder sonstigen Beschädigungen intakter Siegelnähte führt, da die Erstarrung der Siegelschichten eventuell noch nicht abgeschlossen ist. Andererseits soll der Dichtheitstest aus produktionstechnischen Gründen so unmittelbar wie möglich nach dem Wärmeeintrag durchgeführt werden. Aus dem Stand der Technik ist es hierzu bislang lediglich bekannt, nach dem Wärmeeintrag den Deckel abzuziehen und die hierfür notwendigen Kräfte während der Abkühlung bis zur Erstarrung über die Zeit und/oder die Abziehlänge zu messen, um den sogenannten "Hot-Tack"-Zeitpunkt zu bestimmen, zu dem die Siegelschichten hinreichend erstarrt sind, um eine zerstörungsfreie Dichtheitsprüfung zu ermöglichen.

Das Dokument J-A-2000094523 beschreibt ein Verfahren gemäß dem Oberbegriff des Anspruchs 1.

Ausgehend von dem zuvor beschriebenen Stand der Technik liegt der vorliegenden Erfindung die Aufgabe zugrunde, ein Verfahren zur Einstellung des Bearbeitungsablaufes bei der Herstellung von Siegelnähten anzugeben, mit dem die Bearbeitungsparameter derart eingestellt werden, daß die hergestellten Siegelnähte ohne weiteres alle Qualitätsanforderungen erfüllen und eine verbesserte Qualitätskontrolle ermöglicht wird.

Erfindungsgemäß ist die zuvor hergeleitete und aufgezeigte Aufgabe dadurch gelöst, daß der Bearbeitungsablauf basierend auf dem zeitlichen Verlauf der Grenzflächentemperatur während und nach dem Wärmeeintrag beim Siegeln eingestellt wird. Der vorliegenden Erfindung liegt die Erkenntnis zugrunde, daß aus der Zusammenschau der zeitlichen Verläufe der Grenzflächentemperatur während und nach dem Wärmeeintrag hilfreiche Aufschlüsse für eine Einstellung des Bearbeitungsablaufes gewonnen werden können. Hierdurch lassen sich die Bearbeitungsparameter derart einstellen, daß eine unter Zeit und Kostengesichtspunkten optimierte Herstellung und Qualitätskontrolle von Siegelnähten gewährleistet wird.

Dadurch, daß gemäß einer ersten Ausgestaltung der Zeit-Temperatur-Druck-Verlauf während des Wärmeeintrages erfindungsgemäß basierend auf den zeitlichen Verlauf der Grenzflächentemperatur während und nach dem Wärmeeintrag eingestellt wird, läßt sich eine optimale Qualität der Heißsiegelnähte unter Berücksichtigung der Eingangs erwähnten Anforderungen in möglichst kurzer Zeit und bei optimierten Energieaufwand gewährleisten.

Alternativ oder kumulativ zu der soeben beschriebenen Ausgestaltung wird das erfindungsgemäße Verfahren dadurch weitergebildet, daß der Zeitpunkt für die Dichtheitsprüfung und/oder die mechanische Belastbarkeit nach dem Wärmeeintrag eingestellt wird. Durch die Möglichkeit der genauen Ermittlung des sogenannten "Hot-Tack"-Zeitpunktes aus dem Verlauf der Grenzflächentemperatur vor und nach dem Wärmeeintrag läßt sich der optimale Zeitpunkt für eine erste mechanische Belastung oder für die Durchführung einer zerstörungsfreien Dichtheitsprüfung festlegen.

Durch die Überwachung des Überschreitens der Schmelztemperatur zumindest einer Siegelschicht der Siegelpartner durch die Grenzflächentemperatur während des Wärmeeintrags wird eine der Grundvoraussetzungen zur Herstellung einer Heißsiegelnaht bei der Einstellung des Bearbeitungsablaufes sichergestellt.

Durch eine Erfassung des Integrals des Zeit-Temperaturverlaufes der Grenzflächentemperatur zwischen dem Überschreiten der Schmelztemperatur und dem Unterschreiten der Erstarrungstemperatur zumindest einer Siegelschicht der Siegelpartner wird ein Maß für den Umfang des Aufschmelzens Siegelpartner an der Grenzfläche gewonnen. Je größer das Integral, um so umfangreicher schmelzen die Siegelschichten der Siegelpartner auf. Dementsprechend kann über die Auswertung des Integrals beispielsweise die zum Öffnen der Siegelnaht notwendige Aufreißkraft eingestellt oder eine Mindestfestigkeit über eine Mindestfläche des Integrals bestimmt werden.

Der sogenannte "Hot-Tack"-Zeitpunkt nach dem beispielsweise eine zerstörungsfreie Dichtheitsprüfung möglich ist, läßt sich dadurch bestimmen, daß der Zeitpunkt des Unterschreitens der Schmelztemperatur zumindest einer Siegelschicht der Siegelpartner durch die Grenzflächentemperatur erfaßt wird.

Bei der überwiegenden Anzahl der zur Herstellung einer Siegelschicht verwendeten Materialien findet bei der Abkühlung der Siegelschicht von einer Temperatur oberhalb der Schmelztemperatur auf eine Temperatur unterhalb der Schmelztemperatur eine Rekristallisation statt, die ihrerseits Wärme freisetzt, was sich in Verlauf der Grenzflächentemperatur nach dem Wärmeeintrag durch eine vorübergehende Abnahme der Abkühlrate bemerkbar macht. Wird also gemäß einer weiteren Ausgestaltung der Erfindung das Auftreten einer Rekristallisation zumindest einer Siegelschicht aus einer Abnahme der Abkühlrate nach Beendigung des Wärmeeintrages ermittelt, so läßt sich auch hierüber feststellen, daß unabhängig von dem Überschreiten einer Schmelztemperatur die Siegelschichten zumindest teilweise aufgeschmolzen sind. Die Stärke der Abnahme der Abkühlrate, bzw. die Verzögerung der Abkühlung, liefert für Siegelnähte mit kristallinen Anteilen eine Auskunft darüber, in welchem Umfang die Siegelschichten aufgeschmolzen wurden.

Die Tatsache der Rekristallisation nach dem Aufschmelzen einer Siegelschicht läßt sich auch dadurch nutzen, daß der Rekristallisationszeitpunkt ermittelt wird und aus diesem Rückschlüsse über das Erreichen des sogenannten "Hot-Tack"-Zeitpunktes gewonnen werden.

Es gibt nun eine Vielzahl von Möglichkeiten, daß erfindungsgemäße Verfahren auszugestalten und weiterzubilden. Hierzu wird beispielsweise verwiesen einerseits auf die dem Patentanspruch 1 nachgeordneten Patentansprüche andererseits auch die Beschreibung eines Ausführungsbeispiels in Verbindung mit der Zeichnung. In der Zeichnung zeigt
- Fig. 1: a) Anhand von zwei Ausführungsbeispielen schema
b) tisch den Aufbau der Siegelpartner vor dem Versiegeln,
- Fig. 2: den Zeit-Temperatur-Verlauf der Grenzflächentemperatur für zwei Ausführungsbeispiele von Siegelverbindungen und
- Fig. 3: den Zeit-Temperatur-Verlauf der Grenzflächentemperatur bei einem weiteren Ausführungsbeispiel einer Siegelverbindung und unterschiedlichen Siegeltemperaturen.

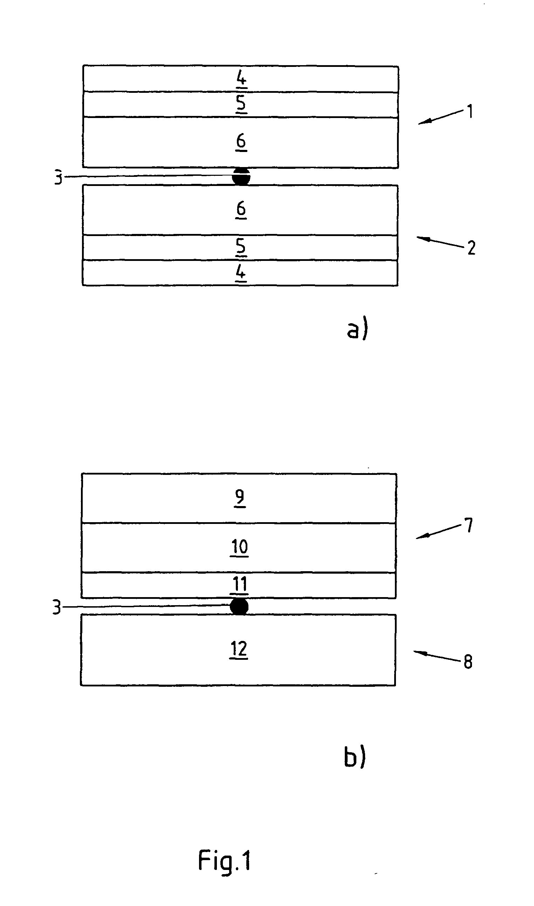

In Figur 1 a) ist schematisch der Aufbau zweier Siegelpartner 1, 2 und die Anordnung eines Thermoelementes 3 zur Messung der Grenzflächentemperatur an der Grenzfläche zwischen den Siegelpartnern 1, 2 während des Siegelvorganges dargestellt. Bei dem dargestellten Ausführungsbeispiel weisen die Siegelpartner 1, 2 einen identischen Aufbau auf. Sie bestehen jeweils aus einer äußeren Schicht aus Polyethylen-Terephtalat (PET) 4 einer mittleren Schicht 5 aus einem Aluminium-Werkstoff und einer Siegelschicht 6 aus Polyethylen (PE).

Beim Versiegeln werden die beiden Siegelpartner 1, 2 durch nicht dargestellte Siegelwerkzeuge zusammengepreßt. Die Siegelwerkzeuge befinden sich dabei auf einer Temperatur T und werden mit einem Druck p für eine Zeit t zusammengepreßt oder nach einem T,P,t-Programm mit zeitveränderlicher Temperatur und/oder zeitveränderlichem Druck. Die Temperatur T, der Druck p und die Zeit t bzw. ein T,P,t-Programm können abhängig von der jeweiligen Siegelvorrichtung in vorgegebenen Grenzen eingestellt werden.

Zur Aufnahme des Grenzflächentemperaturverlaufes, die zur Verwirklichung der Erfindung notwendig ist, befindet sich das Thermoelement 3 während des gesamten Siegelvorgangs zwischen den Polyethylenschichten 6 beider Siegelpartner 1, 2. Nach Beendigung des Meßvorganges ist also das Thermoelement 3 mit in die erkaltete Siegelnaht eingesiegelt. Demzufolge ist die Messung des Verlaufes der Grenzflächentemperatur bei einem als Thermoelement 3 ausgebildeten Temperaturmeßelement ausschließlich während eines oder einer Vielzahl von außerhalb des eigentlichen Produktionsprozesses, allerdings auf den für die Produktion eingesetzten Maschinen vor Ort, durchgeführten Versiegelungen ausschließlich zum Zwecke der Aufnahme dieser Verläufe möglich. Dies ist jedoch völlig ausreichend, um die notwendigen Informationen zur Verbesserung des Bearbeitungsablaufes zu gewinnen. Die ansonsten in der regulären Produktion eingesetzten Siegelmaschinen müssen lediglich die Einführung der Thermoelemente zwischen die Siegelwerkzeuge gestatten und eine Übertragung der Meßergebnisse über beispielsweise eine Schleppleitung oder per Telemetrie zulassen.

In Figur 1 b) ist ein zweites Ausführungsbeispiel mit zwei alternativen Siegelpartnern 7, 8 dargestellt, die einen abweichenden Schichtaufbau aufweisen. Der Siegelpartner 7 besteht aus einer Schicht aus einem Aluminium-Werkstoff 9, einer Polyethylen-Terephtalat (PET) Schicht 10 und einer Siegellackschicht 11. Der zweite Siegelpartner 8 besteht bei dem zweiten Ausführungsbeispiel vollständig aus Polypropylen (PP) 12.

Das in Figur 1 a) dargestellte Ausführungsbeispiel gibt die Konstellation beim Verschweißen von Laminaten beispielsweise bei der Herstellung von Standbodenbeuteln wieder, während das in Figur 1 b) dargestellte Ausführungsbeispiel das Herstellen einer Siegelnaht zum Verbinden eines Aufreißdeckels mit einem Becher wiedergibt.

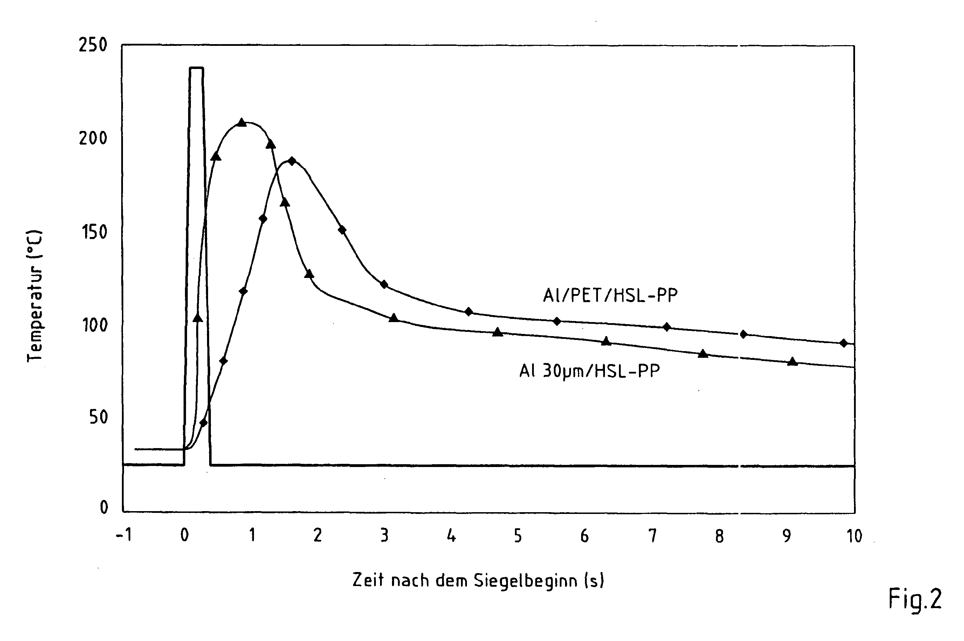

In Figur 2 ist durch einen Graphen ohne Marker die Zeit-Temperaturkurve des Wärmeeintrags über zwei Siegelbacken, durch einen Graphen mit dreieckigen Markern die Meßpunkte des Zeit-Temperaturverlaufs für die Grenzflächentemperatur an der Grenzfläche eines Aluminium (30 µm) /Heißsiegellacklaminats als erstem Siegelpartner und Polypropylen (PP) als zweitem Siegelpartner und durch einen Graphen mit rautenförmigen Markern die Meßpunkte des Zeit-Temperaturverlaufs der Grenzflächentemperatur an einer Grenzfläche zwischen einem Aluminium/Polyethylen-Terephtalat/Heißsiegellacklaminat als erstem Siegelpartner und Polypropylen (PP) als zweitem Siegelpartner dargestellt. Die Zeit-Temperaturkurve des Wärmeeintrags wird vorzugsweise über an die Siegelmaschine angeschlossene Eingänge der Meßapparatur aufgenommen. In dieser Darstellung ist besonders deutlich zu erkennen, daß der Verlauf der Grenzflächentemperatur während und nach dem Wärmeeintrag beim Heißsiegeln gemessen werden muß, um vollständigen Aufschluß über den Siegelvorgang zu gewinnen. In beiden Fällen wird die höchste Grenzflächentemperatur erst deutlich nach dem Ende des Wärmeeintrages erreicht. In beiden Fällen liefert außerdem das Integral des Zeit-Temperaturverlaufes der Grenzflächentemperatur zwischen dem Überschreiten der Schmelztemperatur und dem Unterschreiten der Erstarrungstemperatur wertvolle Informationen über die Qualität der hergestellten Heißsiegelnaht.

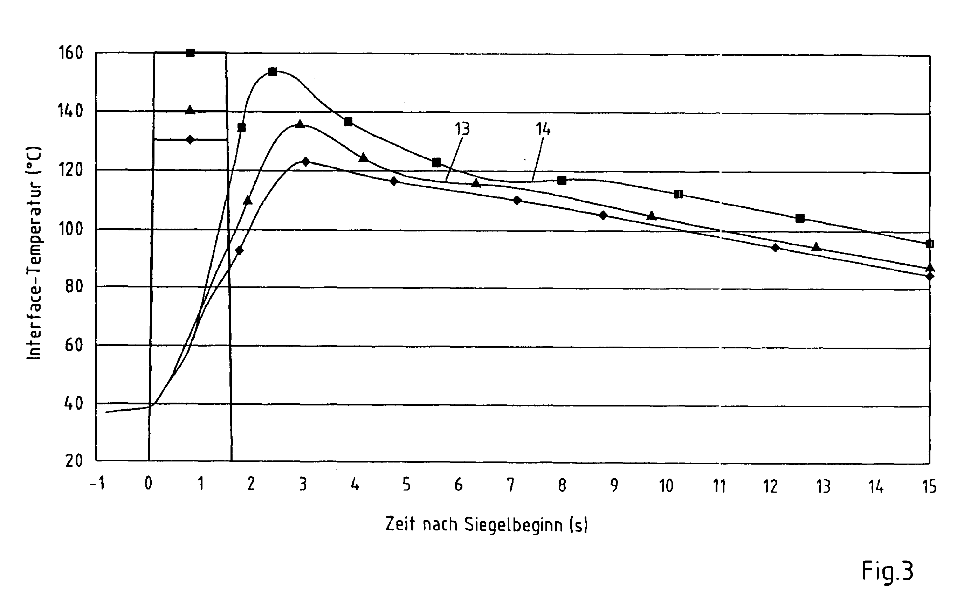

In Figur 3 ist mit Hilfe von Graphen mit quadratischen, dreieckigen und rautenförmigen Markern zunächst der Zeitverlauf des Wärmeeintrags dargestellt. Der Wärmeeintrag erfolgte bei den in Figur 3 dargestellten drei Versuchen jeweils über 1,5 Sekunden bei einer Backentemperatur von 160, 140 und 130 Grad Celsius. Der jeweils zugehörige Zeit-Temperaturverlauf der Grenzflächentemperatur ist über Graphen, die mit quadratischen, dreieckigen und rautenförmigen Markern gekennzeichnet sind, ebenfalls ersichtlich. Alle drei Meßkurven betreffen den Verlauf der Grenzflächentemperatur an der Grenzfläche zwischen einem Polyethylen-Terephtalat (12 µm)/Aluminium (9 µm)/ Polyethylen-Terephtalat (70 µm)-Laminat als erstem und zweitem Siegelpartner.

Auch aus den in Figur 3 dargestellten Meßkurven ist deutlich zu ersehen, daß die maximale Grenzflächentemperatur erst erheblich nach Beendigung des Wärmeeintrages erreicht wird. Auch hier liefert wieder das Integral des Zeit-Temperaturverlaufes der Grenzflächentemperatur zwischen dem Überschreiten der Schmelztemperatur und dem Unterschreiten der Erstarrungstemperatur wertvolle Informationen im Hinblick auf die erreichte Siegelqualität. Weitere Informationen gewinnt man bei den dargestellten Meßkurven aus der Abflachung des Abkühlungsverlaufes durch Rekristallisation, die allerdings nicht bei jedem Siegelwerkstoff beobachtet werden kann. Bei der durch Rauten markierten Meßkurve ist eine solche Abflachung aufgrund fehlender oder unerheblicher Rekristallisationen nicht zu erkennen. Man kann hier dabei davon ausgehen, daß die Siegelschichten nicht hinreichend aufgeschmolzen sind, um eine dauerhafte Siegelverbindung herzustellen. Bei der durch Dreiecke markierten Meßkurve läßt sich hingegen eine Abflachung 13 deutlich erkennen, so daß auf eine umfangreiche Rekristallisation und damit eine gute Siegelnahtqualität geschlossen werden kann. Die durch Quadrate markierte Meßkurve läßt schließlich nur eine geringfügige stärkere Abflachung 14 erkennen, so daß davon auszugehen ist, daß die Siegelnahtqualität durch eine auf 160 Grad Celsius erhöhte Siegelbackentemperatur nicht wesentlich verbessert werden kann. Aus dem Vergleich der letzten beiden Kurven ergibt sich jedoch auch, daß die Erstarrung bei einer Siegelbackentemperatur von 160 Grad Celsius etwa zwei Sekunden später stattfindet als bei einer Siegelbackentemperatur von 140 Grad Celsius, so daß die optimale Siegelbackentemperatur im vorliegenden Ausführungsbeispiel voraussichtlich im Bereich von 140 Grad Celsius liegt, da hier eine gute Siegelqualität bei frühzeitigem Erreichen des "Hot-Tack"-Zeitpunktes gewährleistet ist.

Der Rekristallisationsumfang bzw. der Rekristallisationszeitpunkt läßt sich präziser als aus den dargestellten Meßkurven als solche aus der ersten oder zweiten Ableitung der Meßkurven über die Bestimmung von Maxima bzw. Nulldurchgängen ermitteln. Diese ersten oder zweiten Ableitungen können in den EDV-Systemen, die standardmäßig zur Aufnahme derartiger Meßkurven verwendet werden, ohne Aufwand gebildet werden.

Der Vollständigkeit halber soll erwähnt werden, daß das Meßsignal des zwischen den Siegelpartnern an der Grenzfläche angebrachten Thermoelementes von einem Analog/Digitalwandler aufgenommen und in ein digitales Signal transformiert wird, welches von einem beispielsweise auf einem tragbaren EDV-System installierten Meß- und Auswerteprogramm erfaßt wird. Derartige Systeme an sich gehören zum Stand der Technik.

## Patentansprüche

1. Verfahren zur Einstellung des Bearbeitungsblaufs bei der Herstellung von Siegelnähten, bei welchem mit Hilfe eines Temperaturmeßelementes ein zeitlicher Verlauf der Grenzflächentemperatur an der Grenzfläche zwischen den Siegelpartnern gemessen wird, wobei die Bearbeitungsparameter der für die Produktion eingesetzten Maschinen basierend auf dem zeitlichen Verlauf der Grenzflächentemperatur während des Wärmeeintrags beim Siegeln eingestellt werden, **dadurch gekennzeichnet, daß** du Bearbeitungsparameter der für die Produktion eingesetzten Maschinen basierend auf dem Zeitlichen Verlauf der Grenzflächentemperatur auch nach dem Wärmeeintrag beim Segeln eingestellt werden.

2. Verfahren nach Anspruch 1,
**dadurch gekennzeichnet, daß** als Bearbeitungsparameter ein Zeit-Temperatur-Druck-Verlauf während des Wärmeeintrages bei den für die Produktion eingesetzten Maschinen eingestellt wird.

3. Verfahren nach Anspruch 1 oder 2,
**dadurch gekennzeichnet, daß** als Bearbeitungsparameter ein Zeitpunkt für die Dichtheitsprüfung und/oder die mechanische Belastbarkeit nach dem Wärmeeintrag bei den für die Produktion eingesetzten Maschinen eingestellt wird.

4. Verfahren nach einem der Ansprüche 1 bis 3,
**dadurch gekennzeichnet , daß** während des Wärmeeintrags das Überschreiten der Schmelztemperatur zumindest einer Siegelschicht der Siegelpartner durch die Grenzflächentemperatur überwacht wird.

5. Verfahren nach einem der Ansprüche 1 bis 4,
**dadurch gekennzeichnet, daß** das Integral des Zeit-Temperaturverlaufes der Grenzflächentemperatur zwischen dem Überschreiten der Schmelztemperatur und dem Unterschreiten der Erstarrungstemperatur zumindest einer Siegelschicht der Siegelpartner erfaßt wird.

6. Verfahren nach einem der Ansprüche 1 bis 5,
**dadurch gekennzeichnet, daß** der Zeitpunkt des Unterschreitens der Schmelztemperatur zumindest einer Siegelschicht der Siegelpartner durch die Grenzflächentemperatur erfaßt wird.

7. Verfahren nach einem der Ansprüche 1 bis 6,
**dadurch gekennzeichnet, daß** das Auftreten einer Rekristallisation zumindest einer Siegelschicht aus einer Abnahme der Abkühlrate nach Beendigung des Wärmeeintrages ermittelt wird.

8. Verfahren nach Anspruch 7,
**dadurch gekennzeichnet, daß** der Rekristallisationszeitpunkt ermittelt wird.

## Claims

1. A method for setting a machining sequence for the manufacture of sealing seams, in which the interface temperature at the interface between the sealing partners is measured using a temperature measuring element,
whereas the machining parameters of the machines used for the production are set based on the variation in time of the interface temperature during heat input during the sealing, **characterized in that** the machining parameters of the machines used for the production are also set based on the variation in time of the interface temperature after heat input during the sealing.

2. The method according to claim 1,
**characterized in that** the time-temperature-pressure progression during heat input is set at the machines used for the production as a machining parameter.

3. The method according to claim 1 or 2,
**characterized in that** the time for the tightness check and/or the mechanical loadability after heat input is set at the machines used for the production as a machining parameter.

4. The method according to one of claims 1 to 3,
**characterized in that** the point at which the interface temperature exceeds the melting temperature of at least one sealing layer of the sealing partners is monitored during heat input.

5. The method according to one of claims 1 to 4,
**characterized in that** the integral of the time-temperature progression of the interface temperature is determined between the point where the temperature exceeds the melting temperature and falls below the solidification temperature of at least one sealing layer of the sealing partners.

6. The method according to one of claims 1 to 5,
**characterized in that** the time at which the interface temperature falls below the melting temperature of at least one sealing layer of the sealing partners is determined.

7. The method according to one of claims 1 to 6,
**characterized in that** the recrystallization of at least one sealing layer can be determined from a reduction in the cooling rate after heat input is complete.

8. The method according to claim 7,
**characterized in that** the recrystallization time is determined.

## Revendications

1. Procédé de réglage du processus d'usinage de joints de soudure, dans lequel un tracé temporel de la température d'interface au niveau de l'interface entre les éléments soudés est mesuré à l'aide d'un thermomètre, les paramètres de traitement des machines utilisées pour la production étant réglés en se basant sur le tracé temporel de la température d'interface pendant l'apport de chaleur à l'occasion de la soudure,
**caractérisé en ce que** les paramètres de traitement des machines utilisées pour la production sont réglés en se basant sur le tracé temporel de la température d'interface également après l'apport de chaleur à l'occasion de la soudure.

2. Procédé selon la revendication 1,
**caractérisé en ce qu'**un tracé du temps, de la température et de la pression est réglé comme paramètre d'usinage pendant l'apport de chaleur dans les machines utilisées pour la production.

3. Procédé selon la revendication 1 ou 2,
**caractérisé en ce qu'**un moment fixé pour le test d'étanchéité et/ou la charge mécanique admissible est réglé comme paramètre de traitement après l'apport de chaleur dans les machines utilisées pour la production.

4. Procédé selon l'une quelconque des revendications 1 à 3,
**caractérisé en ce que** le dépassement de la température de fusion pendant l'apport de chaleur d'au moins une couche de soudure des éléments soudés par la température d'interface est surveillé.

5. Procédé selon l'une quelconque des revendications 1 à 4,
**caractérisé en ce que** l'intégrale du tracé temps-température de la température d'interface entre le dépassement de la température de fusion et le sous-dépassement de la température de solidification d'au moins une couche de soudure des éléments soudés est détectée.

6. Procédé selon l'une quelconque des revendications 1 à 5,
**caractérisé en ce que** le moment du sous-dépassement de la température de fusion d'au moins une couche de soudure des éléments soudés par la température d'interface est détecté.

7. Procédé selon l'une quelconque des revendications 1 à 6,
**caractérisé en ce que** l'apparition d'une recristallisation d'au moins une couche de soudure est déterminée à partir d'une diminution de la vitesse de refroidissement une fois l'apport de chaleur terminé.

8. Procédé selon la revendication 7,
**caractérisé en ce que** le point de recristallisation est déterminé.
